# DEMANDE DE BREVET EUROPEEN

(11) **EP 3 428 319 A1**
(43) Date de publication de la demande: **16.01.2019**
(21) Numéro de dépôt: 18182681.9
(22) Date de dépôt: 10.07.2018
(51) Int. Cl.: C25B 15/08, C25B 1/10, C25B 9/10, C25B 11/04, C25B 15/02

(54) **SYSTEME ELECTROCHIMIQUE D'ELECTROLYSE DE L'EAU COMPORTANT UN ASSEMBLAGE MEMBRANE ELECTRODES A PORTIONS D'ELECTROLYSE ET DE SEPARATION**

(30) Priorité: 12.07.2017 FR 1756602
(71) Demandeur: Commissariat à l'Énergie Atomique et aux Énergies Alternatives, 75015 Paris (FR)
(72) Inventeur: VERDIN, Baptiste, 38400 SAINT MARTIN D'HERES (FR); VINCENT, Rémi, 38000 GRENOBLE (FR)
(74) Mandataire: GIE Innovation Competence Group

(57) **Abrégé**

L'invention porte sur un système électrochimique d'électrolyse de l'eau comportant un assemblage membrane électrodes comportant :
• au moins une portion d'électrolyse (10) comportant une première anode (14) et une première cathode (16) séparées l'une de l'autre par la membrane, la première anode étant adaptée à effectuer l'oxydation de l'eau et la première cathode étant adaptée à effectuer la réduction des protons, la première anode étant adaptée à recevoir de l'eau provenant de l'entrée principale (E1) ;
• au moins une portion de séparation (20), située en aval de ladite portion d'électrolyse (10), comportant une deuxième anode (24) et une deuxième cathode (26) séparée l'une de l'autre par la membrane, la deuxième anode étant adaptée à effectuer l'oxydation d'hydrogène reçu de ladite portion d'électrolyse et la deuxième cathode étant adaptée à effectuer la réduction des protons.

## Description

### DOMAINE TECHNIQUE

Le domaine de l'invention est celui de la production d'hydrogène et d'oxygène par électrolyse de l'eau, et concerne en particulier un système électrochimique d'électrolyse de l'eau au moyen d'une membrane échangeuse de protons.

### ÉTAT DE LA TECHNIQUE ANTÉRIEURE

L'électrolyse de l'eau est l'une des techniques utilisées permettant de produire de l'hydrogène et de l'oxygène en vue par exemple d'approvisionner les piles à combustible. La mise en oeuvre de ce procédé de production d'hydrogène et d'oxygène peut être effectuée à l'aide d'un électrolyseur à membrane échangeuse de protons.

Un tel électrolyseur comporte un assemblage membrane électrodes formé d'une anode et d'une cathode séparées l'une de l'autre par une membrane échangeuse de protons. Lorsque de l'eau est amenée au contact de l'anode et lorsqu'une différence de potentiel est appliquée aux électrodes, l'anode réalise l'oxydation de l'eau qui produit de l'oxygène et des protons. Ces derniers migrent au travers de la membrane électrolytique jusqu'à la cathode où est réalisée une réduction des protons, produisant ainsi de l'hydrogène.

Cependant, le coefficient de diffusion de la membrane électrolytique vis-à-vis de l'hydrogène n'est pas nul, de sorte que de l'hydrogène produit à la cathode peut diffuser par perméation jusqu'à l'anode. La fraction volumique d'hydrogène dans l'oxygène, en l'absence d'eau liquide, doit généralement rester inférieure à 4% pour limiter les risques d'ignition.

Une solution pour limiter la perméation à l'anode de l'hydrogène produit à la cathode consiste à augmenter l'épaisseur de la membrane électrolytique. Cependant, cela se traduit par une augmentation de la résistance protonique, ce qui peut entraîner une dégradation des performances électrochimiques de l'électrolyseur.

Il existe un besoin de disposer d'un système électrochimique permettant de produire de l'hydrogène et de l'oxygène par électrolyse de l'eau avec une proportion d'hydrogène dans l'oxygène produit suffisamment faible pour écarter les risques d'ignition et qui soit susceptible de présenter des performances électrochimiques améliorées.

Le document US2012031772 porte sur un système électrochimique à électrolyse de l'eau dont l'objectif est de sécher l'hydrogène généré. Le système comporte deux cellules distinctes raccordées en série. Dans la première cellule, la chambre cathodique 11 contient de l'hydrogène et de l'eau 2. La chambre anodique 12 contient de l'oxygène, qui est évacué par l'orifice 21. L'hydrogène diffuse au travers de la membrane semi-poreuse 14 jusqu'à la chambre cathodique 16 de la deuxième cellule où l'hydrogène est séché puis évacué au travers de l'orifice 20. L'oxygène généré dans la deuxième cellule est évacué via les orifices 22a et 22b. Cependant, ce document ne porte pas sur la problématique de limiter la proportion d'hydrogène dans l'oxygène produit à l'anode d'un électrolyseur.

Le document FR2854278 décrit une même membrane électrolytique partagée entre deux portions fonctionnelles d'un système électrochimique, à savoir une pile 5 et un électrolyseur 7. Le système électrochimique est une pile à combustible qui recycle l'eau généré par la portion pile via la portion électrolyseur. L'oxygène et l'hydrogène générés par la portion électrolyseur sont acheminés vers la portion pile par des moyens d'acheminement. Ce document ne porte pas non plus sur la problématique de limiter la proportion d'hydrogène dans l'oxygène produit à l'anode d'un électrolyseur.

### EXPOSÉ DE L'INVENTION

L'invention a pour objectif de remédier au moins en partie aux inconvénients de l'art antérieur, et plus particulièrement de proposer un système électrochimique d'électrolyse de l'eau comportant une entrée dite principale pour recevoir de l'eau à électrolyser, une première sortie pour fournir de l'hydrogène produit et une deuxième sortie pour fournir de l'oxygène produit, et un assemblage membrane électrodes formé d'une membrane échangeuse de protons séparant des anodes vis-à-vis de cathodes, ledit assemblage comportant :
- au moins une portion dite d'électrolyse comportant une première anode et une première cathode séparées l'une de l'autre par ladite membrane, la première anode étant adaptée à effectuer l'oxydation de l'eau et la première cathode étant adaptée à effectuer la réduction des protons, la première anode étant adaptée à recevoir de l'eau provenant de l'entrée principale ;
- au moins une portion dite de séparation, située fluidiquement en aval de ladite portion d'électrolyse, comportant une deuxième anode et une deuxième cathode séparée l'une de l'autre par ladite membrane, la deuxième anode étant adaptée à effectuer l'oxydation d'hydrogène reçu de ladite portion d'électrolyse et la deuxième cathode étant adaptée à effectuer la réduction des protons.

Certains aspects préférés mais non limitatifs de ce procédé sont les suivants.

La membrane peut être réalisée d'un seul tenant et en un même matériau.

Le système électrochimique peut comporter un premier circuit électrique adapté à appliquer une première différence de potentiel entre la première anode et la première cathode, et un deuxième circuit électrique adapté à appliquer une deuxième différence de potentiel entre la deuxième anode et la deuxième cathode de même signe que la première différence de potentiel.

Les première et deuxième anodes d'une part et les première et deuxième cathodes d'autre part peuvent être électriquement isolées les unes des autres.

La portion d'électrolyse et la portion de séparation peuvent être respectivement segmentées en une pluralité de portions élémentaires d'électrolyse et une pluralité de portions élémentaires de séparation. Les portions élémentaires peuvent être agencées mutuellement de manière à présenter une alternance longitudinale, suivant un axe d'écoulement anodique, d'une portion élémentaire d'électrolyse avec une portion élémentaire de séparation.

Le système électrochimique peut comporter un circuit de distribution anodique s'étendant entre une entrée anodique reliée à l'entrée principale et une sortie anodique reliée à la deuxième sortie, et adapté à amener un fluide au contact des première et deuxième anodes, et peut comporter un circuit de distribution cathodique s'étendant entre une entrée cathodique et une sortie cathodique reliée à la première sortie, et adapté à amener un fluide au contact des première et deuxième cathodes.

Le système électrochimique peut comporter des plaques conductrices dites anodique et cathodique, chaque plaque conductrice étant réalisée d'un seul tenant, présentant une face interne et une face externe, la face interne présentant des structurations formant un circuit de distribution fluidique, la plaque conductrice anodique étant adaptée à appliquer un premier potentiel électrique à la première anode et un deuxième potentiel électrique différent du premier potentiel à la deuxième anode et la plaque conductrice cathodique étant adaptée à appliquer un troisième potentiel électrique à la première cathode et un quatrième potentiel électrique différent du troisième potentiel à la deuxième cathode.

La plaque conductrice anodique, resp. cathodique, peut comporter un matériau électriquement isolant définissant la face interne et la face externe opposée, la face interne comportant des canaux de distribution fluidique séparés longitudinalement deux à deux par une paroi longitudinale venant au contact d'une anode, resp. cathode par une surface d'appui, des lignes électriquement conductrices s'étendant au niveau des surfaces d'appui de parois longitudinales et étant adaptées, pour un premier ensemble d'entre elles, à appliquer à la première anode, resp. cathode, un potentiel électrique et, pour un deuxième ensemble d'entre elles, à appliquer à la deuxième anode, resp. cathode, un potentiel électrique différent.

Chaque plaque conductrice peut comporter des première et deuxième lignes conductrices dites de reprise de contact s'étendant sur la face externe, et des premiers et deuxièmes vias conducteurs s'étendant entre la face externe et la face interne dans les parois longitudinales, la première ligne conductrice de reprise de contact étant adaptée à appliquer un potentiel électrique au premier ensemble de lignes conductrices par des premiers vias conducteurs, et la deuxième ligne conductrice de reprise de contact étant adaptée à appliquer un potentiel électrique différent au deuxième ensemble de lignes conductrices par les deuxièmes vias conducteurs.

Le système électrochimique peut comporter un séparateur de phase à la deuxième sortie.

La première anode peut comporter un catalyseur favorisant l'oxydation de l'eau, le catalyseur étant choisi parmi l'iridium et le ruthénium, et la deuxième anode peut comporter un catalyseur favorisant l'oxydation de l'hydrogène, le catalyseur comportant du palladium ou du platine.

La première cathode et la deuxième cathode peuvent comporter chacune un catalyseur favorisant la réduction des protons, le catalyseur comportant du palladium ou du platine.

L'invention porte également sur un procédé d'électrolyse de l'eau, comportant une introduction d'eau, de préférence en sur-stoechiométrie, à l'entrée principale du système électrochimique selon l'une quelconque des caractéristiques précédentes.

L'invention porte sur un procédé de réalisation d'un système électrochimique selon l'une quelconque des caractéristiques précédentes, comportant une étape de détermination d'une valeur de surface active de la portion de séparation de sorte qu'une proportion d'hydrogène à la deuxième sortie est inférieure ou égale à une valeur seuil prédéfinie, compte-tenu d'une valeur dite maximale de proportion d'hydrogène issu de la portion d'électrolyse et d'une tension électrique appliquée entre la deuxième anode et la deuxième cathode.

Le procédé de réalisation peut comporter une étape de détermination du nombre de portions élémentaires d'électrolyse et de portions élémentaires de séparation de sorte qu'une proportion d'hydrogène associée à une portion élémentaire d'électrolyse est inférieure ou égale à une valeur seuil prédéfinie, compte-tenu d'une valeur prédéterminée de l'épaisseur de la membrane et d'une tension électrique appliquée entre la première anode et la première cathode.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

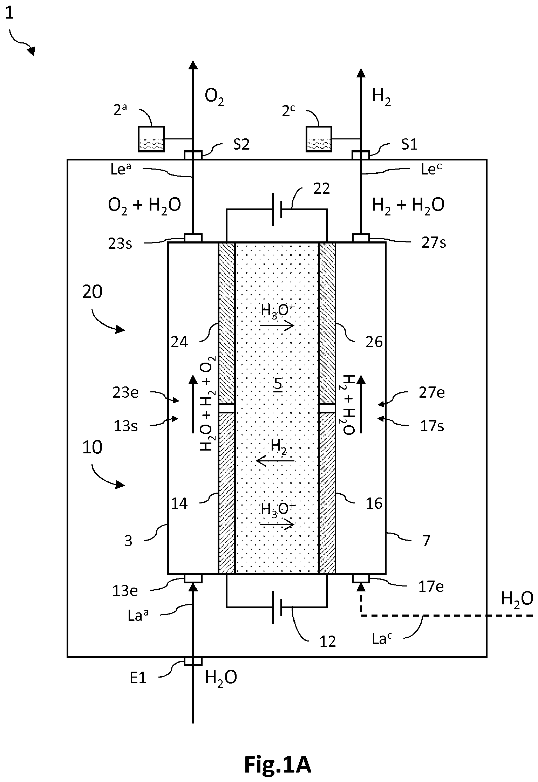

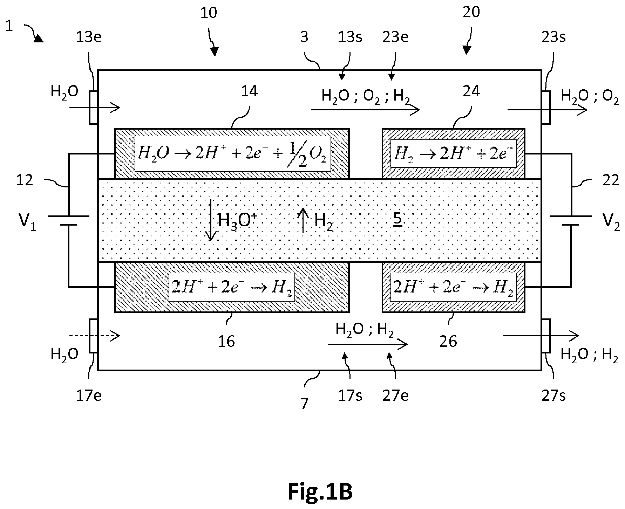

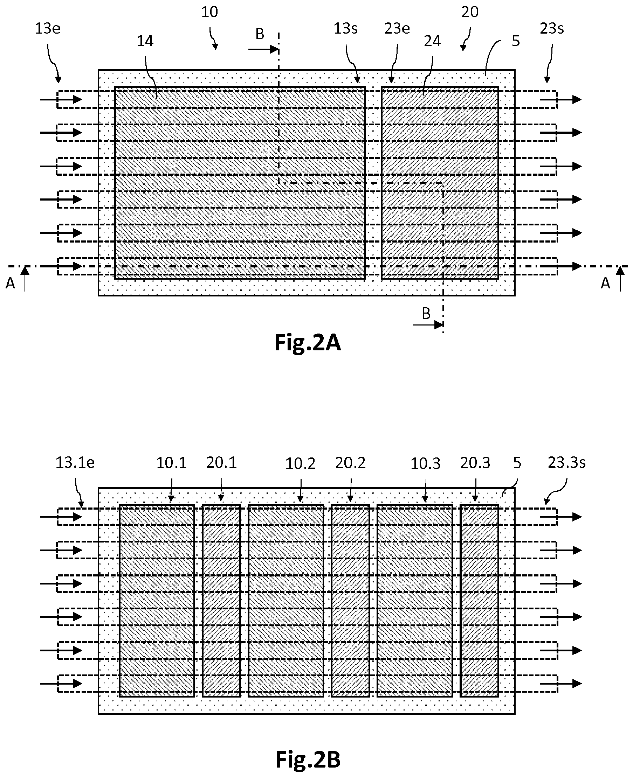

la figure 1A est une vue schématique et partielle d'un système électrochimique d'électrolyse de l'eau selon un mode de réalisation, et la figure 1B est une vue en coupe longitudinale selon un plan de coupe A-A illustré sur la fig.2A, schématique et partielle du système électrochimique selon le mode de réalisation ;
les figures 2A et 2B sont des vues de dessus, côté anodique, de différentes variantes de l'assemblage membrane électrodes ;

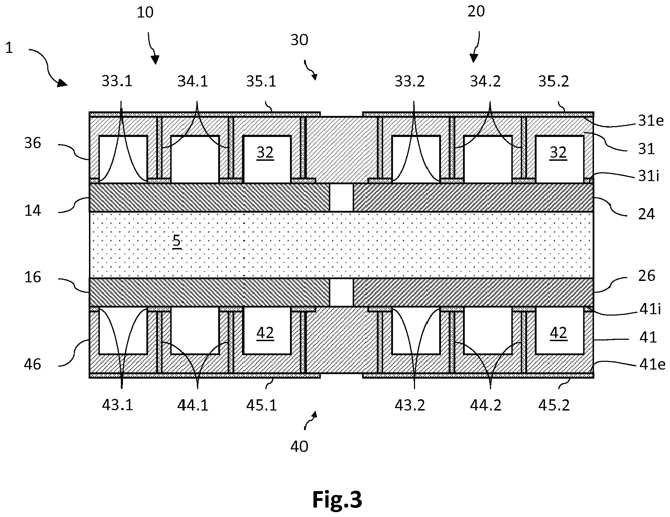

la figure 3 est une vue en coupe transversale selon un plan de coupe B-B illustré sur la fig.2A, schématique et partielle, du système électrochimique selon un mode de réalisation dans lequel les plaques conductrices anodique et cathodique comportent chacune une plaque de céramique structurée de type circuit imprimé.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un système électrochimique et un procédé d'électrolyse de l'eau pour produire de l'hydrogène et de l'oxygène. Le système électrochimique comporte un assemblage membrane électrodes (AME) dont la membrane électrolytique est du type membrane échangeuse de protons. La réaction électrochimique d'électrolyse de l'eau conduit à la génération d'oxygène côté anode et d'hydrogène côté cathode. Cependant, de l'hydrogène généré à la cathode peut diffuser par perméation au travers de la membrane électrolytique pour rejoindre l'anode et se mélanger à l'oxygène produit. L'invention porte sur un système électrochimique comportant un même AME au sein duquel sont formées au moins une portion dite d'électrolyse et au moins une portion de séparation agencées au niveau de la même membrane électrolytique.

L'invention permet alors de séparer à l'anode l'hydrogène présent de l'oxygène, pour ainsi limiter la valeur de la proportion d'hydrogène à l'anode, et donc limiter les risques d'ignition. L'invention autorise également la diminution de l'épaisseur de la membrane électrolytique en vue d'augmenter les performances du système électrochimique. Par ailleurs, la segmentation de la portion d'électrolyse et de la portion de séparation en plusieurs portions distinctes élémentaires qui alternent longitudinalement permet de limiter la proportion locale d'hydrogène dans le circuit de distribution anodique. Par proportion d'hydrogène, on entend la fraction volumique d'hydrogène.

Les figures 1A et 1B illustrent schématiquement un système électrochimique 1 d'électrolyse de l'eau selon un mode de réalisation. Le système électrochimique 1 est adapté à recevoir en entrée E1 de l'eau à électrolyser, et à fournir de l'hydrogène à une première sortie Si dite cathodique et de l'oxygène à une deuxième sortie S2 dite anodique. Il comporte pour cela un assemblage membrane électrodes formé d'au moins une portion d'électrolyse 10 et d'au moins une portion de séparation 20. L'eau introduite en entrée E1 est en phase liquide, et l'oxygène et l'hydrogène récupérés respectivement aux sorties S2 et S1 sont en phase gazeuse. La figure 1B est une vue selon le plan de coupe A-A illustré sur la figure 2A.

Dans ce mode de réalisation, le système électrochimique 1 comporte une portion amont d'électrolyse 10 suivie d'une portion aval de séparation 20, mais il peut en variante comporter plusieurs portions dites élémentaires d'électrolyse 10.1, 10.2... et plusieurs portions dites élémentaires de séparation 20.1, 20.2..., agencées de préférence l'une par rapport à l'autre de manière à former une alternance longitudinale d'une portion élémentaire d'électrolyse 10.1, 10.2... avec une portion élémentaire de séparation 20.1, 20.2... suivant un axe longitudinal d'écoulement fluidique à l'anode. Par alternance longitudinale, on entend que les différents types de portions élémentaires se succèdent tour à tour, de manière répétée, périodique ou non, suivant l'axe longitudinal d'écoulement fluidique à l'anode.

L'assemblage membrane électrodes comporte une même membrane électrolytique 5 échangeuse de protons séparant, d'une part, une première anode 14 vis-à-vis d'une première cathode 16 au niveau d'une portion d'électrolyse 10, et d'autre part, une deuxième anode 24 vis-à-vis d'une deuxième cathode 26 au niveau d'une portion de séparation 20.

La membrane électrolytique 5 permet la diffusion de protons d'une anode jusqu'à une cathode, l'anode et la cathode étant situées en regard l'une de l'autre, les protons pouvant se présenter au sein de la membrane sous la forme d'ions H₃O⁺. Elle présente un coefficient non nul de perméation de l'hydrogène, autorisant ainsi la diffusion de l'hydrogène au travers de la membrane 5 de la cathode jusqu'à l'anode. La membrane électrolytique 5 est monolithique, et est de préférence réalisée en un même matériau sur toute son étendue surfacique. Elle peut ainsi être réalisée à partir de matériaux choisis habituellement par l'homme du métier, tels que ceux commercialisés sous la référence Nafion 115 ou Nafion 117 qui présente un coefficient de perméation à l'hydrogène de l'ordre de 1,25.10⁴ cm³/s/cm² à 80°C et à pression atmosphérique.

La portion d'électrolyse 10 est adaptée à réaliser l'électrolyse d'au moins une partie de l'eau reçue à l'entrée principale E1 du système électrochimique 1. La portion d'électrolyse 10 est formée pour cela d'une première anode 14 et d'une première cathode 16 séparées l'une de l'autre par la membrane 5 échangeuse de protons, et est associée à un premier circuit électrique 12 permettant d'appliquer une différence de potentiel V1 aux électrodes 14, 16 de la portion d'électrolyse 10.

La première anode 14 repose sur une face dite anodique de la membrane électrolytique 5. Elle comporte une couche active adaptée à réaliser l'oxydation de l'eau. La couche active comporte un catalyseur favorisant cette réaction d'oxydation, par exemple de l'oxyde d'iridium ou de ruthénium. La réaction d'oxydation de l'eau s'écrit :

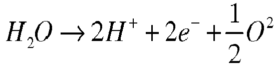

La première cathode 16 repose sur une face dite cathodique, opposée à la face anodique, de la membrane électrolytique 5, et est en regard de la première anode 14. Elle comporte une couche active adaptée à réaliser la réduction des protons ayant diffusé au travers de la membrane électrolytique 5 avec les électrons issus de l'oxydation de l'eau. La couche active comporte un catalyseur favorisant cette réaction de réduction, par exemple du palladium ou des particules de platine supportées par du carbone. La rédaction de réduction des protons s'écrit :

2*H*⁺ + 2*e⁻* → *H*₂

Le premier circuit électrique 12 permet d'appliquer une différence de potentiel électrique V1, de préférence continue, entre la première anode 14 et la première cathode 16, assurant ainsi l'oxydation de l'eau à l'anode 14, la circulation des électrons dans le circuit électrique 12 jusqu'à la cathode 16, et la réduction des protons à la cathode 16. La tension électrique appliquée V1 est positive, dans le sens où le potentiel électrique imposé à l'anode 14 est supérieur à celui imposé à la cathode 16. Elle peut être comprise entre 1,3V et 3V, par exemple égale à 1,8V environ, pour une densité de courant comprise, par exemple, entre 50mA/cm2 et 4A/cm2.

La portion de séparation 20 est située en aval de la portion d'électrolyse 10, dans le sens longitudinal de l'écoulement fluidique entre une entrée anodique 13e et une sortie anodique 23s d'un circuit de distribution anodique 3. La portion de séparation 20 est adaptée à séparer l'hydrogène de l'oxygène, au sein du fluide reçu de la portion amont d'électrolyse 10. Elle est formée pour cela d'une deuxième anode 24 et d'une deuxième cathode 26 séparées l'une de l'autre par la même membrane électrolytique 5, et est associée à un deuxième circuit électrique 22 permettant d'appliquer une différence de potentiel V2 aux électrodes 24, 26 de la portion de séparation 20. La deuxième anode 24 est située en aval de la première anode 14 de sorte que le fluide provenant de la première anode 14 vient ensuite au contact de la deuxième anode 24. De la même manière, la deuxième cathode 26 est située en aval de la première cathode 16 de sorte que le fluide provenant de la première cathode 16 vient ensuite au contact de la deuxième cathode 26.

La deuxième anode 24 repose sur la face anodique de la membrane électrolytique 5. Elle est distincte de la première anode 14 dans le sens où les première et deuxième anodes 14, 24 ne sont pas en contact électrique l'une avec l'autre. Elle comporte une couche active adaptée à réaliser l'oxydation de l'hydrogène. La couche active comporte un catalyseur favorisant cette réaction d'oxydation, par exemple du palladium ou des particules de platine supportées par du carbone. Comme indiqué précédemment, la réaction d'oxydation de l'hydrogène s'écrit :

*H*₂ → 2*H*⁺ + 2*e*⁻

La deuxième cathode 26 repose sur la face cathodique de la membrane électrolytique 5 et est en regard de la deuxième anode 24. Elle est distincte de la première cathode 16 dans le sens où les première et deuxième cathodes 16, 26 ne sont pas en contact électrique l'une avec l'autre. Elle comporte une couche active adaptée à réaliser la réduction des protons ayant diffusé au travers de la membrane électrolytique 5 avec les électrons issus de l'oxydation de l'hydrogène. La couche active comporte un catalyseur favorisant cette réaction de réduction, par exemple du palladium ou des particules de platine supportées par du carbone. Comme indiqué précédemment, la réaction de réduction des protons s'écrit :

2*H*⁺ + 2*e*⁻ → *H*₂

Le deuxième circuit électrique 22 permet d'appliquer une différence de potentiel électrique V2, de préférence continue, entre l'anode 24 et la cathode 26 de la portion de séparation 20, assurant ainsi l'oxydation de l'hydrogène à l'anode 24, la circulation des électrons jusqu'à la cathode 26, puis la réduction des protons à la cathode 26. A titre d'exemple, la tension électrique appliquée V2 est de même signe que la tension électrique V1, et est d'une valeur inférieure à la tension électrique V1, par exemple dix fois inférieure, et peut être égale à 0,2V environ.

Un circuit de distribution anodique 3 assure l'écoulement de fluide à partir d'un collecteur d'entrée 13e également appelé entrée anodique, jusqu'à un collecteur de sortie 23s appelé sortie anodique. L'entrée anodique 13e est reliée à l'entrée principale E1 du système électrochimique 1 par une ligne fluidique d'alimentation La^{a} et reçoit ainsi en entrée l'eau à électrolyser. La sortie anodique 23s est reliée à la deuxième sortie S2 du système électrochimique 1 par une ligne fluidique d'évacuation Le^{a} et fournit ainsi en sortie de l'eau n'ayant pas été oxydée, de l'oxygène produit par oxydation de l'eau et éventuellement de l'hydrogène dont la proportion est inférieure à une valeur définie, par exemple de l'ordre de 1% à 2%, voire moins. Le circuit de distribution anodique 3 permet d'amener le fluide présent en contact avec la première anode 14 de la portion d'électrolyse 10 et avec la deuxième anode 24 de la portion de séparation 20. Il est formé dans une plaque conductrice 30 permettant d'appliquer des potentiels électriques différents aux première et deuxième anodes 14, 24, dont un exemple est décrit plus loin en référence à la fig.3.

Un circuit de distribution cathodique 7 assure l'écoulement de fluide à partir d'un collecteur d'entrée 17e également appelé entrée cathodique, jusqu'à un collecteur de sortie 27s appelé sortie cathodique. L'entrée cathodique 17e est reliée une entrée secondaire E2 du système électrochimique 1 par une ligne fluidique d'alimentation La^{c} et reçoit ainsi en entrée de l'eau, de préférence sous pression, permettant d'améliorer l'humidification de la membrane électrolytique 5. La sortie cathodique 27s est reliée à la première sortie Si du système électrochimique 1 par une ligne fluidique d'évacuation Le^{c} et fournit ainsi en sortie de l'eau n'ayant pas été oxydée et de l'hydrogène produit par réduction protonique. Le circuit de distribution cathodique 7 est formé dans une plaque conductrice 40 dont un exemple est décrit en référence à la fig.3.

Ainsi, à la sortie anodique 23s, le fluide comporte peu ou pas d'hydrogène, l'hydrogène présent dans le circuit de distribution anodique 3 du fait de la perméation au travers de la membrane électrolytique 5 ayant été au moins en partie oxydé à la deuxième anode 24 de la portion de séparation 20. Il reste ainsi essentiellement de l'oxygène en phase gazeuse et le cas échéant de l'eau liquide n'ayant pas été oxydée, ces espèces ne réagissant pas avec le catalyseur de l'anode 24 de la portion de séparation 20. Par ailleurs, bien que la membrane électrolytique 5 autorise la diffusion de l'hydrogène produit à la deuxième cathode 26 jusqu'à la deuxième anode 24, l'hydrogène ayant diffusé par perméation est toutefois oxydé par le catalyseur présent à la deuxième anode 24.

A la deuxième sortie S2 du système électrochimique 1 se trouve ainsi essentiellement de l'oxygène en phase gazeuse et le cas échéant de l'eau liquide. Un séparateur de phase 2^{a} peut être présent pour collecter l'eau liquide et laisser s'écouler l'oxygène. Dans la mesure où le fluide issu de la portion d'électrolyse 10 a traversé la portion de séparation 20, il contient peu ou pas d'hydrogène. La proportion volumique d'hydrogène au sein de l'oxygène peut ainsi être très faible, par exemple être comprise entre 1% et 2% voire moins. A la première sortie Si du système électrochimique 1, se trouve ainsi de l'hydrogène, ici sous pression, et le cas échéant de l'eau liquide. Un séparateur de phase 2^{c} peut être présent pour collecter l'eau liquide et laisser s'écouler l'hydrogène en phase gazeuse.

Ainsi, un tel système électrochimique 1 permet de réaliser la production d'hydrogène et d'oxygène par électrolyse de l'eau, fournissant ainsi de l'hydrogène à la première sortie Si et de l'oxygène à la deuxième sortie S2. A la deuxième sortie S2, après une séparation de phase permettant de collecter l'eau liquide présente, les gaz sortants contiennent de l'oxygène et éventuellement de l'hydrogène avec une fraction volumique inférieure à 4% et de préférence inférieure ou égale à 1% ou 2%. Ainsi, les risques de sécurité liés à l'ignition de l'hydrogène avec l'oxygène sont minimisés voire écartés. On obtient ainsi de l'oxygène purifié à la deuxième sortie S2, ainsi que de l'hydrogène purifié à la première sortie Si.

Pour éviter les risques d'ignition entre l'hydrogène et l'oxygène dans le circuit de distribution anodique 3, l'eau liquide introduite à l'entrée principale E1 peut être en sur-stoechiométrie, c'est-à-dire que la quantité d'eau liquide introduite à l'entrée E1 est supérieure, par exemple dix fois supérieure, à la quantité d'eau consommée à l'anode 14 de la ou des portions d'électrolyse 10. Dans ce cas, de l'eau liquide est présente dans le circuit de distribution anodique 3 jusqu'à la sortie anodique 23s. En variante, comme décrit plus loin, l'eau liquide introduite à l'entrée E1 peut être en stoechiométrie sensiblement égale à 1, l'alternance longitudinale entre des portions élémentaires d'électrolyse 10.1, 10.2... et des portions élémentaires de séparation 20.1, 20.2... dont le rapport des surfaces actives est prédéfinie, permettant d'éviter que la proportion d'hydrogène ne devienne localement supérieure à une valeur seuil voulue.

Le fonctionnement du système électrochimique 1 selon le mode de réalisation est maintenant décrit en référence aux figures 1A et 1B.

De l'eau est fournie à l'entrée principale E1 du système électrochimique 1, qui est transmis à l'entrée 13e du circuit anodique 3 par la ligne d'alimentation La^{a}. La pression anodique à l'entrée peut être égale à 1 bar environ. L'eau liquide injectée est ici en sur-stoechiométrie, par exemple d'un rapport 10, de sorte que la quantité d'eau injectée à l'entrée anodique 13e est supérieure à la quantité d'eau consommée à l'anode 14 de la portion d'électrolyse 10. Dans le cas d'une pluralité de portions élémentaires d'électrolyse 10.1, 10.2..., la quantité d'eau consommée par oxydation correspond à la somme de la quantité d'eau consommée par chacune des portions élémentaires d'électrolyse.

De préférence, de l'eau est également introduite à l'entrée secondaire E2 du système électrochimique 1, qui est injectée à l'entrée cathodique 17e du circuit cathodique 7 par la ligne d'alimentation La^{c}, de manière à assurer une humidification correcte de la membrane électrolytique 5. La pression cathodique à l'entrée 17e est de l'ordre de plusieurs dizaines de bars, par exemple est égale à 30 bars environ.

L'eau liquide s'écoule au sein du circuit de distribution anodique 3 à partir de l'entrée anodique 13e en direction de la sortie cathodique 23s. Il traverse dans un premier temps la portion d'électrolyse 10 et vient au contact de la première anode 14. Du fait de l'application de la différence de potentiel V1 aux électrodes 14, 16 de la portion d'électrolyse 10 et par la présence d'un catalyseur anodique adapté (ici de l'oxyde d'iridium), la portion d'électrolyse 10 réalise l'oxydation de l'eau à l'anode 14. De l'eau est ainsi oxydée, ce qui génère de l'oxygène en phase gazeuse, des électrons, et des protons, ces derniers diffusant au travers de la membrane électrolytique 5 jusqu'à la cathode 16 sous la forme d'ions H₃O⁺.

La portion d'électrolyse 10 réalise la réduction des protons à la cathode 16, par la différence de potentiel V1 appliquée et la présence d'un catalyseur cathodique adapté (ici des particules de platine). Ainsi, les protons ayant migré au travers de la membrane 5 se recombinent avec des électrons ayant circulé dans le circuit électrique 12 pour produire de l'hydrogène. Du fait de la perméation de la membrane électrolytique 5, et notamment par la différence de pression entre le circuit cathodique 7 et le circuit anodique 3, de l'hydrogène formé à la cathode 16 diffuse par perméation au travers de la membrane 5 et rejoint le circuit anodique 3.

Ainsi, en sortie anodique 13s de la portion d'électrolyse 10 se trouvent de l'eau liquide, de l'oxygène issu de l'oxydation de l'eau, et de l'hydrogène ayant diffusé au travers de la membrane 5 par perméation. La proportion d'hydrogène dans l'oxygène peut ici être supérieure à 4%, par exemple être égale à 10% voire à 20%, sans qu'il y ait un risque de sécurité dans la mesure où de l'eau liquide est présente du fait de la sur-stoechiométrie. A la sortie cathodique 17s de la portion d'électrolyse 10 se trouvent de l'eau liquide ainsi que de l'hydrogène formé à la cathode 16.

Les fluides issus de la portion d'électrolyse 10 continuent de s'écouler dans les circuits de distribution 3, 7, et rejoignent la portion de séparation 20 située en aval de la portion d'électrolyse 10. Du fait de l'application d'une différence de potentiel V2 aux électrodes 24, 26 de la portion de séparation 20 et par la présence d'un catalyseur anodique adapté (par exemple des particules de platine ou de palladium), la portion de séparation 20 réalise à l'anode 24 l'oxydation de l'hydrogène contenu dans le fluide. L'eau liquide et l'oxygène ne sont pas oxydés/réduits par le catalyseur utilisé. Les protons diffusent au travers de la membrane électrolytique 5, de l'anode 24 jusqu'à la cathode 26, sous la forme d'ions H₃O⁺. De préférence, la surface active de l'anode 24 est adaptée de sorte que sensiblement tout l'hydrogène présent soit oxydé. Ainsi, en sortie 23s de la portion de séparation 20, la proportion d'hydrogène dans l'oxygène est inférieure ou égale à une valeur prédéfinie.

La portion de séparation 20 réalise la réduction des protons à la cathode 26, du fait de la différence de potentiel appliquée V2 et la présence d'un catalyseur cathodique adapté (ici particules de platine). Ainsi, les protons ayant diffusé au travers de la membrane 5 se recombinent avec les électrons ayant circulé dans le circuit électrique 22 pour former de l'hydrogène.

Aussi, à la sortie anodique 23s de la portion de séparation 20, le fluide circulant dans le circuit de distribution 3 ne contient sensiblement plus que de l'eau liquide et de l'oxygène. L'hydrogène présent dans le circuit de distribution anodique 3 a été au moins en partie oxydé par la portion de séparation 20, de sorte que la proportion volumique d'hydrogène à la sortie anodique 23s du circuit de distribution 3 est de préférence inférieure à 4%, par exemple est égale à 1% à 2%, voire moins. De plus, à la sortie cathodique 27s est récupéré essentiellement de l'hydrogène et le cas échéant de l'eau liquide.

La première sortie Si reçoit l'hydrogène et le cas échéant de l'eau liquide provenant de la sortie cathodique 27s par la ligne d'évacuation cathodique Le^{c}. Un séparateur de phase 2^{c} est de préférence prévu pour collecter l'eau liquide et laisser s'écouler l'hydrogène gazeux. La deuxième sortie S2 reçoit l'oxygène et l'eau liquide issus de la sortie anodique 23s par la ligne d'évacuation anodique Le^{a}. Un séparateur de phase 2^{a} est de préférence prévu pour collecter l'eau liquide et laisser s'écouler l'oxygène gazeux.

Ainsi, le système électrochimique 1 permet de réaliser la production d'hydrogène par électrolyse de l'eau, fournissant ainsi de l'hydrogène à la sortie Si, et de l'oxygène purifié à la sortie S2 avec une faible proportion volumique d'hydrogène, par exemple inférieure à 3%, ce qui permet de limiter les risques d'ignition. Par ailleurs, la portion de séparation 20 ne requiert que peu d'énergie électrique, par exemple moins de 1% de la consommation électrique totale, de sorte que la puissance électrique globale du système électrochimique 1 est peu impactée. La réalisation de portions d'électrolyse 10 et de séparation 20 au sein du même assemblage membrane électrodes, ces portions partageant la même membrane électrolytique 5, permet d'obtenir un système électrochimique 1 intégré particulièrement compact. Les coûts de réalisation peuvent ainsi être réduits.

Comme décrit plus loin, l'épaisseur de la membrane électrolytique 5 au niveau de la portion d'électrolyse 10, et éventuellement au niveau de toute la membrane 5, peut être diminuée dans le but d'augmenter les performances du système électrochimique 1. De plus, le dimensionnement de la surface active de la portion de séparation 20 par rapport à celle de la portion d'électrolyse 10 peut être déterminé en fonction d'une proportion voulue d'hydrogène dans l'oxygène en sortie anodique 23s. Enfin, le fait de prévoir une alternance longitudinale de plusieurs portions élémentaires d'électrolyse 10.1, 10.2... avec plusieurs portions élémentaires de séparation 20.1, 20.2... permet de contrôler la valeur maximale de la proportion locale d'hydrogène au sein du circuit de distribution anodique 3.

Le système électrochimique 1 peut ainsi présenter une membrane électrolytique 5 dont l'épaisseur au niveau de la ou des portions d'électrolyse 10 peut être diminuée, permettant alors d'augmenter les performances électrochimiques du système 1. L'épaisseur peut en outre être diminuée sur toute l'étendue surfacique de la membrane 5, donc également au niveau de la ou des portions de séparation 20.

En effet, en diminuant l'épaisseur de la membrane électrolytique 5, il est possible de diminuer la différence de potentiel V1 appliquée aux électrodes 14, 16 de la portion d'électrolyse 10 pour une même densité de courant électrique. La proportion d'hydrogène dans l'oxygène à la sortie anodique 13s de la portion d'électrolyse 10 reste donc inchangée, mais la puissance électrique nécessaire est diminuée, ce qui permet d'obtenir un meilleur rendement global du système 1, le rendement global étant défini comme le rapport entre le pouvoir calorifique supérieur du gaz produit sur la puissance électrique consommée). A titre d'exemple, l'épaisseur d'une membrane électrolytique 5 de type Nafion 115 ou Nafion 117, habituellement de l'ordre de 150µm à 180µm, peut être diminuée à 100µm environ, voire moins, par exemple être inférieure ou égale à 80µm, voire à 70µm, par exemple égale à 50µm environ.

En variante, pour une épaisseur diminuée de la membrane électrolytique 5 au niveau de la portion d'électrolyse 10, et à tension électrique V1 inchangée, la densité de courant électrique peut donc être augmentée. Cette diminution d'épaisseur peut se traduire par une augmentation de la quantité d'hydrogène ayant diffusé par perméation, sans toutefois que la proportion d'hydrogène dans l'oxygène soit effectivement augmentée, du fait de l'augmentation de la quantité d'oxygène produit. Il est noté que la proportion d'hydrogène en sortie de la portion d'électrolyse 10 peut être élevée, par exemple de l'ordre de 10% à 20% voire plus, sans présenter pour autant des risques de sécurité du fait de la présence d'eau liquide du fait de la sur-stoechiométrie. Cette valeur maximale de proportion d'hydrogène au sein du circuit de distribution anodique 3 est diminuée par la portion de séparation 20 jusqu'à être inférieure ou égale à une valeur prédéfinie.

En effet, l'épaisseur de la membrane électrolytique 5 au niveau de la portion d'électrolyse 10 peut être dimensionnée en fonction de la proportion maximale d'hydrogène acceptée dans le circuit de distribution 3. Plus précisément, la proportion maximale d'hydrogène dans le circuit de distribution 3 peut s'écrire comme le rapport (d_{H2}/d_{O2})₁₀ entre un débit molaire (d_{H2})₁₀ d'hydrogène ayant migré par perméation au travers de la membrane électrolytique 5 au niveau de la portion d'électrolyse 10 sur un débit molaire (d_{O2})₁₀ d'oxygène produit à l'anode 14. Ce rapport (d_{H2}/d_{O2})₁₀ est inversement proportionnel à l'épaisseur de la membrane électrolytique 5 dans la portion d'électrolyse 10. En effet, le débit molaire (d_{H2})₁₀ d'hydrogène reçu à l'anode 14 est proportionnel au rapport de la surface active S₁₀ de la portion d'électrolyse 10 sur l'épaisseur eₘ de la membrane 5, autrement dit : (d_{H2})₁₀ ∝ S₁₀/eₘ. Par surface active, on entend la surface de la membrane 5 qui est recouverte de part et d'autre par une anode 14, 24 et la cathode en regard 16, 26. De plus, le débit molaire (d_{O2})₁₀ produit à l'anode 14 par oxydation de l'eau est proportionnel au courant électrique I₁₀ de la portion d'électrolyse 10 : (d_{O2})₁₀ ∝ I₁₀. Ainsi, le rapport (d_{H2}/d_{O2})₁₀ est proportionnel à S₁₀/(eₘ.I₁₀). Aussi, il est possible de déterminer l'épaisseur de la membrane électrolytique 5 dans la portion d'électrolyse 10 en fonction d'une proportion maximale donnée d'hydrogène.

Par ailleurs, la portion de séparation 20 peut être dimensionnée, notamment en termes de surface active, pour que la proportion d'hydrogène V_{H2,s} en sortie 23s soit sensiblement égale ou inférieure à une valeur prédéfinie. A ce titre, un procédé de réalisation du système électrochimique 1 peut comporter une étape de détermination de la surface active S₂₀ de la portion de séparation 20 de telle manière que la proportion d'hydrogène à la sortie anodique 23s du circuit de distribution 3, et donc à la deuxième sortie S2, présente une valeur de sortie V_{H2,s} inférieure ou égale à une valeur prédéfinie, compte tenu d'une valeur maximale de la proportion d'hydrogène issue de la portion d'électrolyse 10 et de la tension électrique V2 appliquée.

En effet, la différence de la proportion d'hydrogène V_{H2} dans la portion de séparation 20, entre la valeur haute V_{H2,e} à l'entrée 23e et la valeur basse V_{H2,s} à la sortie 23s, correspond au débit molaire d'hydrogène (d_{H2})₂₀ ayant été oxydé à l'anode 24, qui est proportionnel au courant électrique I₂₀ de la portion de séparation 20 : (d_{H2})₂₀ ∝ I₂₀. Ainsi, pour une tension électrique donnée V2 et une courant électrique I₂₀ permettant d'obtenir le débit molaire d'hydrogène (d_{H2})₂₀ voulu, la courbe de polarisation V2=f(i₂₀) de la portion de séparation 20 permet de déduire la valeur de la densité de courant i₂₀ nécessaire, et donc la valeur minimale de la surface active S₂₀ de la portion de séparation 20. La valeur basse de sortie V_{H2,s} peut donc être inférieure ou égale à une valeur seuil prédéterminée

Il apparaît par ailleurs que la proportion maximale d'hydrogène dans le circuit de distribution 3 est liée à la valeur de la surface active de la portion d'électrolyse 10. Ainsi, la segmentation de la portion d'électrolyse 10 en une pluralité de portions élémentaires d'électrolyse 10.1, 10.2... permet de diminuer la proportion maximale locale associée à chaque portion élémentaire d'électrolyse 10.1, 10.2.... A titre d'exemple, pour une surface active Sₐ d'une unique portion d'électrolyse 10 conduisant à une proportion volumique d'hydrogène de 20% environ, une segmentation de la portion unique d'électrolyse 10 en cinq portions élémentaires 10.1, 10.2, 10.3, 10.4, 10.5 conduit à une proportion volumique maximale d'hydrogène de 4% environ associée à chaque portion élémentaire. L'alternance longitudinale de portions élémentaires d'électrolyse 10.1, 10.2... avec des portions élémentaires de séparation 20.1, 20.2... permet de limiter la proportion maximale locale d'hydrogène au sein du circuit de distribution 3.

Le procédé de réalisation du système électrochimique peut ainsi comporter une étape de détermination du nombre de portions élémentaires d'électrolyse 10.1, 10.2... et de portions élémentaires de séparation 20.1, 20.2... pour que la proportion d'hydrogène issu d'une portion élémentaire d'électrolyse (10.1, 10.2...) soit inférieure ou égale à une valeur seuil prédéfinie, compte-tenu d'une valeur prédéterminée de l'épaisseur de la membrane 5 et de la tension électrique V1 appliquée. En effet, comme mentionné précédemment, pour une surface active cumulée S10 des portions élémentaires d'électrolyse 10.1, 10.2... et une tension électrique appliquée V1, et pour une épaisseur eₘ de la membrane 5, la proportion d'hydrogène maximale côté anodique est proportionnelle à S₁₀/(eₘ.I₁₀), où I₁₀ est le courant électrique correspondant à la tension appliquée V1. La proportion d'hydrogène maximale, associée à chaque portion élémentaire d'électrolyse est ainsi proportionnelle à (S₁₀)_{loc}/(eₘ.I₁₀), où (Sio)ioc est la surface active associée à la portion élémentaire considérée qui est égale à S₁₀/n, n étant le nombre de portions élémentaires d'électrolyse.

Les figures 2A et 2B illustrent deux exemples d'agencement d'une portion d'électrolyse 10 et d'une portion de séparation 20 du système électrochimique 1. Sont illustrés l'anode 14 de la portion d'électrolyse 10 et celle 24 de la portion de séparation 20. Des canaux du circuit de distribution anodique 3 sont représentés en pointillés et les flèches représentent l'axe d'écoulement fluidique. D'autres exemples d'axes d'écoulement sont bien entendu possibles, comme par exemple des canaux en serpentin. La surface active de la portion d'électrolyse 10 est notée ici S₁₀ et celle de la portion de séparation 20 est notée S₂₀.

Comme l'illustre la figure 2A, à l'entrée x_{10,i} du circuit de distribution 3, la proportion d'hydrogène locale v_{H2} est sensiblement nulle : v_{H2}(x_{10,i})∼0 où x₁₀ est l'abscisse curviligne du circuit de distribution au niveau de la portion d'électrolyse 10. Elle augmente progressivement le long de la portion d'électrolyse 10 à mesure que l'hydrogène diffuse par perméation au travers de la membrane 5, et atteint ainsi une valeur maximale en sortie x_{10,f} de la portion d'électrolyse 10 : v_{H2}(x_{10,f})=vₘₐₓ, par exemple 12%, cette valeur ayant été préalablement définie par la valeur de la surface active S₁₀. Le fluide s'écoule le long du circuit de distribution 3 pour traverser ensuite la portion aval de séparation 20. A l'entrée x2o,i de la portion de séparation 20, la proportion d'hydrogène présente la valeur maximale : v_{H2}(x_{20,i})∼vₘₐₓ. Elle diminue ensuite progressivement le long de la portion de séparation 20 à mesure que l'hydrogène est oxydé à l'anode 24, pour atteindre une valeur minimale en sortie x_{20,f} : v_{H2}(x_{20,f})=vₘᵢₙ, par exemple 0% environ, cette valeur ayant été préalablement définie par la valeur de surface active S₂₀.

Sur la figure 2B est illustrée une alternance longitudinale de trois portions élémentaires d'électrolyse 10.1, 10.2, 10.3 avec trois portions élémentaires de séparation 20.1, 20.2, 20.3. Ainsi, il y a une succession longitudinale de trois couples formés chacun d'une portion élémentaire amont d'électrolyse 10.iᵢ=1-3 et d'une portion élémentaire aval de séparation 20.iᵢ.1-3. Dans cet exemple, à titre purement illustratif, les surfaces actives élémentaires S'₁₀ et S'₂₀ sont égales au tiers des surfaces actives S₁₀ et S₂₀ de la figure 2A. Ainsi, à l'entrée x_{10,1;i} de la portion élémentaire d'électrolyse 10₁, la proportion d'hydrogène locale est sensiblement nulle : v_{H2}(x_{10,1;i})∼0. Elle augmente progressivement le long de la portion élémentaire d'électrolyse 10.1 à mesure que l'hydrogène diffuse par perméation au travers de la membrane 5, et atteint ainsi une valeur maximale : v_{H2}(x_{10.1,f})=v'ₘₐₓ, par exemple 4%, cette valeur correspond ici sensiblement au tiers de la valeur maximale de 12% de l'exemple de la fig.3A. Le fluide s'écoule le long du circuit de distribution 3 pour traverser ensuite la portion élémentaire aval de séparation 20₁. A l'entrée de cette portion de séparation 20₁, la proportion d'hydrogène présente la valeur maximale : v_{H2}(x_{20.1,i})∼v'ₘₐₓ, puis diminue progressivement le long à mesure que l'hydrogène est oxydé à l'anode 24.1, pour atteindre une valeur minimale en sortie : v_{H2}(x_{20.1,f})=v'ₘᵢₙ, par exemple 0% environ, cette valeur ayant été préalablement définie par la valeur de la surface active S'_{20.1}. La proportion d'hydrogène évolue ensuite de manière similaire jusqu'à la sortie 23.3s du circuit de distribution anodique 3. Aussi, il apparaît que la segmentation et l'alternance longitudinale des portions élémentaires d'électrolyse 10.1, 10.2... et des portions élémentaires de séparation 20.1, 20.2... permettent de diminuer la valeur maximale de la proportion d'hydrogène locale au sein du circuit de distribution, sans que cela n'impacte les performances électrochimiques du système 1.

La figure 3 illustre, de manière schématique et partielle, en coupe transversale selon le plan de coupe B-B illustré sur la fig.2A, un exemple de système électrochimique 1 selon le mode de réalisation.

Est ici illustré l'assemblage membrane électrode dont une première zone forme une portion amont d'électrolyse 10 et une deuxième zone, distincte de la première, forme une portion aval de séparation 20, située dans la continuité fluidique des circuits de distribution 3, 7. La portion d'électrolyse 10 comporte la première anode 14 et la première cathode 16 séparées l'une de l'autre par la membrane électrolytique 5 et la portion de séparation 20 comporte la deuxième anode 24 et la deuxième cathode 26 séparées l'une de l'autre par la même membrane électrolytique 5. Les première et deuxième anodes 14, 24 sont distinctes l'une de l'autre pour éviter tout contact électrique, tout comme le sont les première et deuxième cathodes 16, 26. De manière connue, la membrane électrolytique 5 est conductrice de protons mais isolante vis-à-vis des électrons. Un espace d'isolation électrique est prévu entre les première et deuxième anodes 14, 24 d'une part, et entre les première et deuxième cathodes 16, 26 d'autre part, qui peut être rempli par un matériau diélectrique.

Chaque circuit de distribution 3, 7 peut être réalisé dans une plaque électriquement conductrice 30, 40. Ainsi, le circuit de distribution anodique 3 est réalisé dans une même plaque conductrice 30 présentant des structurations 32 définissant des canaux de distribution fluidique et qui est adaptée à appliquer un potentiel électrique à la première anode 14 et un potentiel électrique différent à la deuxième anode 24. De même, le circuit de distribution cathodique 7 est réalisé dans une même plaque conductrice 40 présentant des structurations 42 définissant des canaux de distribution fluidique et qui est adaptée à appliquer un potentiel électrique à la première cathode 16 et un potentiel électrique différent à la deuxième cathode 26.

Dans cet exemple, chaque plaque conductrice 30, 40 est réalisée à partir d'un circuit imprimé de type PCB (*Printed Circuit Board,* en anglais). Elle comporte ainsi une partie 31, 41 en un matériau électriquement isolant, par exemple une céramique, sur et dans lequel s'étendent des lignes électriques.

En référence à la plaque conductrice anodique 30 (la plaque cathodique 40 est ici identique), la partie isolante 31 présente une face externe 31e et une face interne 31i opposée l'une à l'autre suivant l'axe d'épaisseur de la plaque 30. La face interne 31i est orientée vers la membrane 5, et comporte des structurations 32 définissant les canaux de distribution. Les canaux de distribution 32 sont séparés deux à deux par une paroi longitudinale 36 de la plaque isolante 31, dont l'extrémité, formant une surface d'appui au contact de l'anode 14 ou 24, est au moins partiellement revêtue par une piste électrique 33.1, 33.2 dite de polarisation. Ainsi, tout ou partie des extrémités des parois longitudinales 36 séparant des canaux adjacents 32 est revêtue d'une telle piste électrique 33.1, 33.2 de polarisation.

Un premier ensemble 33.1 de pistes électriques de polarisation, au contact de la première anode 14, est relié à une piste électrique 35.1 dite de reprise de contact qui s'étend sur la face externe 31.e. La piste 35.1 de reprise de contact est connectée au premier ensemble 33.1 de pistes de polarisation par des premiers vias 34.1. Les vias 34.1 sont des orifices traversants remplis d'un matériau électriquement conducteur, qui s'étendent suivant l'axe d'épaisseur de la plaque isolante 31 dans les parois longitudinales 36.

De manière similaire, un deuxième ensemble 33.2 de pistes électriques de polarisation, au contact de la deuxième anode 24, est relié à une deuxième piste électrique 35.2 de reprise de contact qui s'étend sur la même face externe 31e. La piste 35.2 de reprise de contact est connectée au deuxième ensemble 33.2 de pistes de polarisation par des deuxièmes vias 34.2. Les première et deuxième pistes électriques 35.1, 35.2 de reprise de contact sont électriquement séparées l'une de l'autre.

Ainsi, la même plaque conductrice 30 forme un circuit de distribution fluidique pour les deux anodes 14, 24 et permet d'appliquer à la première anode 14 un premier potentiel électrique et à la deuxième anode 24 un deuxième potentiel électrique différent du premier.

La plaque conductrice cathode 40 peut être identique ou similaire à la plaque conductrice anodique 30 décrite précédemment. Il est par ailleurs possible d'empiler plusieurs assemblages membrane électrodes suivant l'axe d'épaisseur, les assemblages membrane électrodes adjacents étant séparés par des plaques conductrices de type PCB similaires à celles illustrées sur la fig.3.

Des modes de réalisation particuliers viennent d'être décrits. Différentes variantes et modifications apparaîtront à l'homme du métier.

## Revendications

1. Système électrochimique (1) d'électrolyse de l'eau, comportant :
• une entrée dite principale (E1) pour recevoir de l'eau à électrolyser, une première sortie (S1) pour fournir de l'hydrogène produit et une deuxième sortie (S2) pour fournir de l'oxygène produit ;
• un assemblage membrane électrodes formé d'une membrane (5) échangeuse de protons séparant des anodes (14, 24) vis-à-vis de cathodes (16, 26), ledit assemblage comportant :
o au moins une portion dite d'électrolyse (10) comportant une première anode (14) et une première cathode (16) séparées l'une de l'autre par ladite membrane (5), la première anode (14) étant adaptée à effectuer l'oxydation de l'eau et la première cathode (16) étant adaptée à effectuer la réduction des protons, la première anode (14) étant adaptée à recevoir de l'eau provenant de l'entrée principale (E1) ;
o au moins une portion dite de séparation (20), située fluidiquement en aval de ladite portion d'électrolyse (10), comportant une deuxième anode (24) et une deuxième cathode (26) séparée l'une de l'autre par ladite membrane (5), la deuxième anode (24) étant adaptée à effectuer l'oxydation d'hydrogène reçu de ladite portion d'électrolyse (10) et la deuxième cathode (26) étant adaptée à effectuer la réduction des protons.

2. Système électrochimique (1) selon la revendication 1, dans lequel la membrane (5) est réalisée d'un seul tenant et en un même matériau.

3. Système électrochimique (1) selon la revendication 1 ou 2, comportant un premier circuit électrique (12) adapté à appliquer une première différence de potentiel (V1) entre la première anode (14) et la première cathode (16), et un deuxième circuit électrique (22) adapté à appliquer une deuxième différence de potentiel (V2) entre la deuxième anode (24) et la deuxième cathode (26) de même signe que la première différence de potentiel (V1).

4. Système électrochimique (1) selon l'une quelconque des revendications 1 à 3, dans lequel les première et deuxième anodes (14, 24) d'une part et les première et deuxième cathodes (16, 26) d'autre part sont électriquement isolées les unes des autres.

5. Système électrochimique (1) selon l'une quelconque des revendications 1 à 4, la portion d'électrolyse (10) et la portion de séparation (20) étant respectivement segmentées en une pluralité de portions élémentaires d'électrolyse (10.1, 10.2...) et une pluralité de portions élémentaires de séparation (20.1, 20.2...), les portions élémentaires étant agencées mutuellement de manière à présenter une alternance longitudinale, suivant un axe d'écoulement anodique, d'une portion élémentaire d'électrolyse (10.1...) avec une portion élémentaire de séparation (20.1...).

6. Système électrochimique (1) selon l'une quelconque des revendications 1 à 5, comportant un circuit de distribution anodique (3) s'étendant entre une entrée anodique (13e) reliée à l'entrée principale (E1) et une sortie anodique (23s) reliée à la deuxième sortie (S2), et adapté à amener un fluide au contact des première et deuxième anodes (14, 24), et comportant un circuit de distribution cathodique (7) s'étendant entre une entrée cathodique (17e) et une sortie cathodique (27s) reliée à la première sortie (S1), et adapté à amener un fluide au contact des première et deuxième cathodes (16, 26).

7. Système électrochimique (1) selon la revendication 6, comportant des plaques conductrices dites anodique (30) et cathodique (40), chaque plaque conductrice étant réalisée d'un seul tenant, présentant une face interne (31i, 41i) et une face externe (31e, 41e), la face interne (31i, 41i) présentant des structurations (32, 42) formant un circuit de distribution fluidique, la plaque conductrice anodique (30) étant adaptée à appliquer un premier potentiel électrique à la première anode (14) et un deuxième potentiel électrique différent du premier potentiel à la deuxième anode (24) et la plaque conductrice cathodique (40) étant adaptée à appliquer un troisième potentiel électrique à la première cathode (16) et un quatrième potentiel électrique différent du troisième potentiel à la deuxième cathode (26).

8. Système électrochimique (1) selon la revendication 7, dans lequel la plaque conductrice anodique (30), resp. cathodique (40), comporte un matériau électriquement isolant (31, 41) définissant la face interne (31i, 41i) et la face externe (31e, 41e) opposée, la face interne (31i, 41i) comportant des canaux de distribution fluidique (32, 42) séparés longitudinalement deux à deux par une paroi longitudinale (36, 46) venant au contact d'une anode (14, 24), resp. cathode (16, 26) par une surface d'appui, des lignes électriquement conductrices (33.1, 33.2 ; 43.1, 43.2) s'étendant au niveau des surfaces d'appui de parois longitudinales (36, 46) et étant adaptées, pour un premier ensemble (33.1 ; 43.1) d'entre elles, à appliquer à la première anode (14), resp. cathode (16), un potentiel électrique et, pour un deuxième ensemble (33.2, 43.2) d'entre elles, à appliquer à la deuxième anode (24), resp. cathode (26), un potentiel électrique différent.

9. Système électrochimique (1) selon la revendication 8, dans lequel chaque plaque conductrice (30 ; 40) comporte des première (35.1 ; 45.1) et deuxième (35.2 ; 45.2) lignes conductrices dites de reprise de contact s'étendant sur la face externe (31e ; 41e), et des premiers (34.1 ; 44.1) et deuxièmes (34.2 ; 44.2) vias conducteurs s'étendant entre la face externe (31e ; 41e) et la face interne (31i ; 41i) dans les parois longitudinales (36 ; 46), la première ligne conductrice (35.1 ; 45.1) de reprise de contact étant adaptée à appliquer un potentiel électrique au premier ensemble (33.1 ; 43.1) de lignes conductrices par des premiers vias conducteurs (34.1 ; 44.1), et la deuxième ligne conductrice (35.2 ; 45.2) de reprise de contact étant adaptée à appliquer un potentiel électrique différent au deuxième ensemble (33.2 ; 43.2) de lignes conductrices par les deuxièmes vias conducteurs (34.2 ; 44.2).

10. Système électrochimique (1) selon l'une quelconque des revendications 1 à 10, comportant un séparateur de phase (2a) à la deuxième sortie (S2).

11. Système électrochimique (1) selon l'une quelconque des revendications 1 à 11, dans lequel la première anode (14) comporte un catalyseur favorisant l'oxydation de l'eau, le catalyseur étant choisi parmi l'iridium et le ruthénium, et la deuxième anode (24) comporte un catalyseur favorisant l'oxydation de l'hydrogène, le catalyseur comportant du palladium ou du platine.

12. Système électrochimique (1) selon l'une quelconque des revendications 1 à 11, dans lequel la première cathode (16) et la deuxième cathode (26) comportent chacune un catalyseur favorisant la réduction des protons, le catalyseur comportant du palladium ou du platine.

13. Procédé d'électrolyse de l'eau, comportant une introduction d'eau, de préférence en sur-stoechiométrie, à l'entrée principale (E1) du système électrochimique (1) selon l'une quelconque des revendications précédentes.

14. Procédé de réalisation d'un système électrochimique selon l'une quelconque des revendications 1 à 12, comportant une étape de détermination d'une valeur de surface active de la portion de séparation (20) de sorte qu'une proportion d'hydrogène à la deuxième sortie (S2) est inférieure ou égale à une valeur seuil prédéfinie, compte-tenu d'une valeur dite maximale de proportion d'hydrogène issu de la portion d'électrolyse (10) et d'une tension électrique (V2) appliquée entre la deuxième anode (24) et la deuxième cathode (26).

15. Procédé de réalisation d'un système électrochimique selon la revendication 5, comportant une étape de détermination du nombre de portions élémentaires d'électrolyse (10.1, 10.2...) et de portions élémentaires de séparation (20.1, 20.2...) de sorte qu'une proportion d'hydrogène associée à une portion élémentaire d'électrolyse (10.1, 10.2...) est inférieure ou égale à une valeur seuil prédéfinie, compte-tenu d'une valeur prédéterminée de l'épaisseur de la membrane (5) et d'une tension électrique (V1) appliquée entre la première anode (14) et la première cathode (16).
